# EUROPÄISCHE PATENTSCHRIFT

(11) **EP 3 996 978 B1**
(45) Veröffentlichungstag und Bekanntmachung des Hinweises auf die Patenterteilung: **21.06.2023**
(21) Anmeldenummer: 20737162.6
(22) Anmeldetag: 06.07.2020
(51) Int. Cl.: B62D 53/08

(54) **ADAPTERANORDNUNG FÜR EINE SATTELZUGANORDNUNG**
ADAPTER SYSTEM FOR A SEMI-TRAILER ARRANGEMENT
AGENCEMENT ADAPTATEUR POUR UN AGENCEMENT DE REMORQUE

(30) Priorität: 11.07.2019 DE 102019118836
(43) Veröffentlichungstag der Anmeldung: 18.05.2022
(73) Patentinhaber: SAF-HOLLAND GmbH, 63856 Bessenbach (DE)
(72) Erfinder: FELTHAM, Alan, 8240 Thayngen (CH); KÜBLER, Randy, 78244 Gottmadingen (DE); KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2020/069019
(87) Internationale Veröffentlichungsnummer: WO 2021/005012

(56) Entgegenhaltungen:
- EP-A1- 2 112 008
- WO-A1-97/30890
- GB-A- 1 249 134
- US-A- 3 000 654

## Beschreibung

Die Erfindung betrifft eine Adapteranordnung für eine Sattelzuganordnung.

Sattelzuganordnungen sind bereits aus dem Stand der Technik bekannt, diese umfassen zumindest ein Zugfahrzeug und einen Anhänger. Das Zugfahrzeug weist eine Sattelkupplungsanordnung und der Anhänger einen Königszapfen auf, wobei die Sattelkupplungsanordnung und der Königszapfen derart mit einander verkuppelt werden können, dass über diese Elemente eine Zugkraft von dem Zugfahrzeug auf den Anhänger übertragen werden kann. Problematisch bei diesen bekannten Kupplungsanordnungen ist jedoch, dass die Königszapfen der Anhänger teilweise nicht zu den Sattelkupplungsanordnungen der Zugmaschinen passen. Daher muss entweder die Sattelkupplungsanordnung oder der Königszapfen gewechselt werden, um ein sicheres Ankuppeln des Anhängers an das Zugfahrzeug zu erreichen.

Die WO 97/30890 zeigt eine Vorrichtung und eine Methode für die Effizienzsteigerung für das Beladen, Festmachen und Entladen von Anhängern an sog. "RoRo" Schiffen. Die GB 1 249 134 betrifft eine Verbindungseinrichtung für die Verwendung zwischen einem Zugfahrzeug und einem Anhänger.

Die EP 2 112 008 A1 zeigt eine Steckerkonsole für ein Anhängerfahrzeug eines Lastzuges, umfassend einen an einem Lager um ein Kupplungsmittel des Anhängers schwenkbaren Tragarm und einen an dem Tragarm ortsfest angebundenen Stecker.

Die US 3,000,654 A1 betrifft eine Adapteranordnung für die Verbindung eines Anhängers und eines Zugfahrzeugs.

Es ist daher Aufgabe der Erfindung ein System bereitzustellen, welches ein sicheres Verkuppeln zwischen einem Anhänger und einer Zugmaschine ermöglicht, ohne dass ein hoher Arbeitsaufwand verursacht wird.

Diese Aufgabe wird mit einer Adapteranordnung gemäß dem Anspruch 1 gelöst. Weitere Vorteile und Merkmale ergeben sich aus den Unteransprüchen, der Beschreibung sowie aus den Figuren.

Die Erfindung betrifft eine Adapteranordnung, insbesondere Sattelkupplungsadapteranordnung, für einen Sattelzug umfassend einen Grundkörper, eine Kupplungsanordnung, insbesondere eine Sattelkupplungsplatte, und einen Königszapfen, wobei der Königszapfen mittel- und/oder unmittelbar am Grundkörper festgelegt ist, wobei die Kupplungsanordnung als eine separate Kupplungsplatte ausgebildet ist, welche an dem Grundkörper festgelegt ist, und wobei insbesondere die Kupplungsanordnung relativ zum Königszapfen ortsfest ist, wobei die Adapteranordnung einen Steckverbinder, insbesondere für ein automatisches Kupplungssystem, aufweist, wobei der Steckverbinder einen Verbindungsstecker aufweist, wobei der Verbindungsstecker in Richtung der Erstreckungsrichtung des Königszapfens vom Königszapfen beabstandet ist. Die erfindungsgemäße Adapteranordnung dient dazu, in einem Sattelzug angeordnet zu sein. Die Adapteranordnung erfüllt dabei die Funktion eines Zwischenstücks bzw. einer Zwischenanordnung zwischen einem Zugfahrzeug und einem Anhänger. In anderen Worten kann dies bedeuten, dass die Adapteranordnung insbesondere selbst kein Teil des Zugfahrzeugs oder des Anhängers ausbildet. Vorteilhafterweise ist die Adapteranordnung hierzu abstützradfrei ausgebildet. Unter abstützradfrei ausgebildet ist zu verstehen, dass die Adapteranordnung kein abstützendes Rads aufweist, welches während der Fahrt des Sattelzugs mit dem Boden kontaktieren soll. Die Adapteranordnung ist insbesondere als eine Sattelkupplungsadapteranordnung ausgebildet. In anderen Worten kann dies bedeuten, dass die Adapteranordnung dazu dient, in einem Sattelzug angeordnet zu werden, wobei ein Sattelzug sich insbesondere dadurch auszeichnet, dass der Anhänger als ein Sattelauflieger, insbesondere mit einem Königszapfen, und das Zugfahrzeug als ein Zugfahrzeug mit einer Sattelkupplungsplatte ausgebildet sind. Die erfindungsgemäße Adapteranordnung dient dazu, zwischen dem Zugfahrzeug und dem Anhänger angeordnet zu sein und die Zugkräfte während der Fahrt zwischen diesen Fahrzeugteilen des Sattelzugs zu übertragen. Hierzu weist die erfindungsgemäße Adapteranordnung eine Kupplungsanordnung und einen Königszapfen auf, wobei in einem eingekuppelten Zustand, in dem die Adapteranordnung sowohl Kräfte auf das Zugfahrzeug als auch auf den Anhänger überträgt, der Königszapfen der Adapteranordnung in einer Sattelkupplungsadapteranordnung des Zugfahrzeugs angeordnet ist und ein Königszapfen des Anhängers der Sattelzuganordnung in der Kupplungsanordnung der Adapteranordnung. Der Königszapfen der Adapteranordnung ist insbesondere mittel- und/oder unmittelbar am Grundkörper der Adapteranordnung festgelegt. Dieser Grundkörper dient daher dazu als sichere Abstützung des Königszapfens zu dienen. Die Kupplungsanordnung der erfindungsgemäßen Adapteranordnung dient dazu, wie bereits beschrieben mit einem Königszapfen eines Anhängers kuppeln zu können. Hierzu verfügt die Kupplungsanordnung insbesondere über eine Einfahröffnung zum Einfahren des Königszapfens des Anhängers und über einen Sperrmechanismus. Der Sperrmechanismus dient dazu, in einem eingekuppelten Zustand des Königszapfens des Anhängers das Austreten dieses Königszapfens, insbesondere formschlüssig, zu verhindern. Der Sperrmechanismus der Kupplungsanordnung kann insbesondere einen Riegelmechanismus und/oder eine Schlossklaue umfassen. Die Kupplungsanordnung selbst kann beispielsweise zumindest teilweise durch den Grundkörper ausgebildet sein. Dies kann insbesondere dadurch geschehen, dass der Grundkörper selbst die Einfahröffnung aufweist und das der Sperrmechanismus an dem Grundkörper montiert ist und/oder zumindest teilweise von dem Grundkörper selbst ausgebildet ist. Vorzugsweise bildet der Grundkörper selbst zusätzlich auch noch eine Auflagefläche der Kupplungsanordnung aus. Die Auflagefläche der Kupplungsanordnung ist dabei diejenige Fläche oder wird durch diejenigen Flächen gebildet, auf welchen der Anhänger im angekuppelten Zustand aufliegt. In anderen Worten kann dies bedeuten, dass zumindest einige Teile der Kupplungsanordnung einstückig mit dem Grundkörper ausgeführt sein können. Erfindungsgemäß ist die Kupplungsanordnung als eine separate Kupplungsplatte ausgebildet, welche insbesondere an dem Grundkörper festgelegt ist. Bevorzugt ist die Kupplungsanordnung derart ausgebildet, dass diese relativ zum Königszapfen ortsfest ist. Ortsfest bedeutet in diesem Zusammenhang, dass die Lage der Kupplungsanordnung relativ zum Königszapfen sowohl im eingekuppelten als auch im ausgekuppelten Zustand dieselbe ist. Diesbezüglich sei jedoch angemerkt, dass, sollten beispielsweise gewisse Teile der Kupplungsanordnung ein gewisses Spiel und/oder eine gewisse Rotationsausgleichsbewegung, insbesondere um eine horizontale Achse, vollführen können, dennoch eine Ortsfestigkeit der Kupplungsanordnung im Sinne der Erfindung relativ zum Königszapfen gegeben ist. Insbesondere oder alternativ bevorzugt ist es, wenn die Kupplungsanordnung rotationsstarr in Relation zum Königszapfen um die Richtung der Erstreckungsrichtung des Königszapfens angeordnet ist. Hierdurch kann eine besonders mechanisch belastbare Adapteranordnung erreicht werden. Durch die erfindungsgemäße Adapteranordnung ist es möglich, ohne ein Demontieren des Königszapfens des Anhängers und/oder der Sattelkupplungsplatte des Zugfahrzeugs ein sicheres Ankuppeln zwischen einem Anhänger und einem Zugfahrzeug zu erreichen, denn die Adapteranordnung stellt eine Art Kupplungsadapter dar, welcher es ermöglicht, auch prinzipiell nicht passende Königszapfen-Sattelkupplungskonstellationen eines Sattelzugs miteinander verkuppeln zu können. Daher ist die erfindungsgemäße Adapteranordnung in der Lage, ein sicheres Verkuppeln zwischen einem Anhänger und einem Zugfahrzeug zu ermöglichen, ohne dass ein hoher Arbeitsaufwand verursacht wird.

Bevorzugt ist der Königszapfen an einer Königszapfenfläche des Grundkörpers, insbesondere starr, mittel- und/oder unmittelbar angeordnet, und/oder bevorzugt ist die Kupplungsanordnung an einer Sattelkupplungsfläche des Grundkörpers, insbesondere starr, mittel- und/oder unmittelbar angeordnet. Unter starr angeordnet ist dabei in diesem Zusammenhang zu verstehen, dass die Anordnung jegliche translatorische und/oder rotatorische Freiheitsgrade in Relation zum Grundkörper eliminiert. In anderen Worten kann dies bedeuten, dass unter starr zu verstehen ist, dass sämtliche Freiheitsgrade des Körpers (Königszapfen oder Kupplungsanordnung) durch das Anordnen eliminiert bzw. verhindert ist. Dies kann beispielsweise dadurch erfolgen, dass das Anordnen mittels Schrauben, Bolzen oder mittels Schweißen in Relation zur Grundplatte erfolgt. Durch dieses starre Anordnen des Königszapfens und/oder der Kupplungsanordnung, insbesondere der Sattelkupplungsplatte, an der Königszapfenfläche bzw. an der Sattelkupplungsfläche des Grundkörpers, resultiert eine besonders bauraumsparende Adapteranordnung.

Besonders bevorzugt ist es, um eine besonders kompakte und einfach herzustellende Adapteranordnung zu erreichen, wenn die Königszapfenfläche im Wesentlichen parallel zu der Sattelkupplungsfläche ausgebildet ist. Im Wesentlichen parallel sind zwei Flächen insbesondere dann, wenn der kleinstmögliche Winkel der Normalen dieser Flächen (richtungsunabhängig) maximal 7°, bevorzugt maximal 5°, besonders bevorzugt maximal 2° und besonders stark bevorzugt maximal 1° beträgt.

Vorteilhafterweise ist der Königszapfen in Richtung einer Erstreckungsrichtung des Königszapfens gegenüberliegend zu der Kupplungsanordnung an den Grundkörper angeordnet. Die Erstreckungsrichtung des Königszapfens ist diejenige Richtung, in welche sich der Königszapfen erstreckt. Vorteilhafterweise ist der Königszapfen im Wesentlichen rotationssymmetrisch zu dieser Erstreckungsrichtung ausgebildet. Im Wesentlichen rotationssymmetrisch ist ein Königszapfen insbesondere dann, wenn die Flächen, welche im eingekuppelten Zustand mit einer Kupplungsanordnung kontaktieren können, rotationssymmetrisch zu der Erstreckungsrichtung ausgebildet sind. Durch das Anordnen des Königszapfens in Richtung der Erstreckungsrichtung des Königszapfens gegenüberliegend zu der Kupplungsanordnung an dem Grundkörper resultiert eine besonders bauraumsparende und kompakte Adapteranordnung. Durch die Kompaktheit der Adapteranordnung kann insbesondere auch Gewicht gespart werden, sodass die Handhabung der Adapteranordnung durch eine bauraumsparende und/oder kompakte Anordnung stark vereinfacht werden kann.

Bevorzugt ist die Richtung der Erstreckungsrichtung des Königszapfens im Wesentlichen parallel zu einer Normalen einer Auflagefläche der Kupplungsanordnung. Durch diese Ausrichtung des Königszapfens in Relation zur Auflagefläche der Kupplungsanordnung kann der Ankuppelprozess der Adapteranordnung sowohl an das Zugfahrzeug als auch an den Anhänger erleichtert werden. Die Auflagefläche ist dabei durch die Fläche oder ist durch die Flächen gebildet, auf welchen in einem eingekuppelten Zustand der Anhänger aufliegt.

Vorteilhafterweise ist die Projektion des Königszapfens in Richtung der Erstreckungsrichtung des Königszapfens zumindest teilweise, insbesondere vollständig, von der Projektion der Kupplungsanordnung in Richtung der Erstreckungsrichtung des Königszapfens überdeckt. Durch diese Anordnung des Königszapfens an dem Grundkörper in Relation zur Kupplungsanordnung resultiert eine besonders bauraumsparende und kompakte Adapteranordnung. Unter überdeckend sind Projektionen insbesondere dann, wenn die äußere Kontur der einen Projektion von der anderen Projektion vollkommen umschlossen ist. Diesbezüglich sei jedoch angemerkt, dass eine mögliche Einfahröffnung der Kupplungsanordnung nicht für die Projektion maßgeblich ist. In anderen Worten kann dies bedeuten, dass der Teil der Kontur der Projektion der Kupplungsanordnung, welcher durch die Einfahröffnung gebildet ist, durch eine verbindende Linie verbunden werden muss und dass die Projektion des Königszapfens sich innerhalb dieser neuen Projektion befinden kann, um als überdeckt von der Projektion der Kupplungsanordnung im Sinne der Erfindung zu gelten.

Bevorzugt weist die Adapteranordnung eine Ausrichtungsanordnung, insbesondere einen Keil und/oder eine Keilanordnung auf. Der Keil und/oder die Keilanordnung ist insbesondere derart beschaffen, dass dieser Keil bzw. die Keilanordnung im Wesentlichen starr an der Adapteranordnung angebracht ist und/oder nicht drehbar um den Königszapfen angebracht ist. Der Keil bzw. die Keilanordnung ist dabei insbesondere derart beschaffen, dass der Keil bzw. die Keilanordnung ein Verdrehen der Adapteranordnung gegenüber einem Zugfahrzeug, insbesondere einer Sattelkupplungsanordnung auf dem Zugfahrzeug, verhindert. Über den Keil bzw. über die Keilanordnung wird beim Kuppeln zwischen der Adapteranordnung und dem Zugfahrzeug der Adapter zum Zugfahrzeug ausgerichtet. Die Ausrichtungsanordnung ist dazu ausgelegt, dass diese in einem eingekuppelten Zustand formschlüssig mit Teilen des Zugfahrzeugs in Eingriff gebracht ist oder in Eingriff bringbar ist, insbesondere mit einer Sattelkupplungsadapteranordnung des Zugfahrzeugs, sodass eine Rotation der Adapteranordnung um den Königszapfen formschlüssig durch die Ausrichtungsanordnung - im eingekuppelten Zustand - verhindert ist. Hierdurch kann insbesondere erreicht werden, dass die Adapteranordnung rotationsstarr zum Zugfahrzeug im eingekuppelten Zustand ist. Dies hat insbesondere den Vorteil, dass seitlich liegende Teile der Adapteranordnung während der Fahrt nicht mit dem Zugfahrzeug - durch die relative Rotation der Adapteranordnung zum Zugfahrzeug - mit dem Zugfahrzeug kollidieren können.

Erfindungsgemäß weist die Adapteranordnung einen Steckverbinder, insbesondere für ein automatisches Kupplungssystem, auf. Der Steckverbinder dient dabei dazu, die Adapteranordnung energietechnisch mit dem Zugfahrzeug und/oder mit dem Anhänger zu verbinden. Bevorzugt ist der Steckverbinder dabei ein Teil eines automatischen Kupplungssystems. Hierdurch wird ermöglicht, dass die Adapteranordnung Teil eines automatischen Kupplungssystems bilden kann. Bevorzugt ist dieses automatische Kupplungssystem derart ausgebildet, dass der Steckverbinder mit einem korrespondierenden Steckelement automatisch verbunden werden kann, wobei unter automatisch insbesondere zu verstehen ist, dass kein manueller Eingriff am Steckverbinder und/oder am korrespondierenden Steckelement vorgenommen werden muss, um den Steckverbinder energieleitend mit dem Steckerelement zu verbinden. Beispielsweise kann dies dadurch erfolgen, dass der Steckverbinder durch die Relativbewegung der Adapteranordnung zum Zugfahrzeug und/oder zum Anhänger mit dem auf dem Zugfahrzeug bzw. auf dem Anhänger befindlichen Steckerelement energieleitend verbunden wird. Alternativ bevorzugt kann der Steckverbinder auch erst nach dem Einkuppeln des Königszapfens der Adapteranordnung in die Sattelkupplungsplatte des Zugfahrzeugs und/oder nach dem Ankuppeln des anhängerseitigen Königszapfens in die Kupplungsanordnung der Adapteranordnung durch ein aktives Stellglied automatisch verschoben werden.

Weiter erfindungsgemäß weist der Steckverbinder einen Verbindungsstecker auf. Dieser Verbindungsstecker verfügt vorteilhafterweise über Energiekontakte, insbesondere hydraulische, pneumatische und/oder elektrische Kontakte, welche energieleitend mit korrespondierenden Kontakten eines Steckerelements eines Zugfahrzeugs oder eines Anhängers energieleitend verbunden werden können. Vorteilhafterweise verfügt der Verbindungsstecker über Führungsdorne, um das eigentliche Einstecken zu unterstützen. Durch das Vorsehen eines Verbindungssteckers an dem Steckverbinder kann in einfacher Weise ein Teil eines automatischen Kupplungssystems an der Adapteranordnung vorgesehen werden. Hierdurch kann beispielsweise ermöglicht werden, dass, sollte lediglich der Anhänger oder das Zugfahrzeug über ein automatisches Kupplungssystem verfügen und/oder sind die automatischen Kupplungssysteme des Anhängers und des Zugfahrzeugs nicht kompatibel miteinander, so kann die Adapteranordnung als ein Mittel zur energieleitenden Verbindung zwischen dem Anhänger und dem Zugfahrzeug - trotz dieser nicht vorhandenen bzw. nicht kompatiblen Systeme - dienen.

In einer erfindungsgemäßen Ausführungsform ist der Verbindungsstecker in Richtung der Erstreckungsrichtung des Königszapfens, vom Königszapfen beabstandet. Besonders bevorzugt ist der Abstand des Verbindungssteckers von der Kupplungsanordnung größer als der Abstand des Verbindungssteckers von dem Königszapfen, insbesondere in Richtung der Erstreckungsrichtung des Königszapfens. Durch das Beabstanden des Verbindungssteckers, insbesondere in Richtung der Erstreckungsrichtung des Königszapfens, vom Königszapfen kann erreicht werden, dass bei einem Einkuppeln des Königszapfens in eine zugfahrzeugseitige Sattelkupplungsplatte bzw. -anordnung die Zugänglichkeit des Verbindungssteckers nicht durch den Königszapfen der Adapteranordnung behindert ist. Besonders bevorzugt ist es, wenn der Abstand des Verbindungssteckers von der Kupplungsanordnung größer als der Abstand des Verbindungssteckers von dem Königszapfen ist. In anderen Worten kann dies bedeuten, dass der Verbindungsstecker unterhalb des Königszapfens in Richtung der Erstreckungsrichtung des Königszapfens angeordnet ist, sodass die Zugänglichkeit des Verbindungssteckers weiter erhöht wird.

In einer vorteilhaften Ausführungsform weist die Kupplungsanordnung eine Einfahröffnung auf, welche sich in einer Einfahrrichtung erstreckt, wobei ein Anhängerkönigszapfen entlang der Einfahrrichtung in die Einfahröffnung der Sattelkupplungsanordnung einfahrbar ist, wobei der Verbindungsstecker in Richtung der Einfahrrichtung von der Sattelkupplungsplatte und/oder vom Königszapfen und/oder vom Grundkörper beabstandet ist. Hierdurch kann insbesondere eine Kollision des Verbindungssteckers verhindert werden. Darüber hinaus kann durch diese Beabstandung des Verbindungssteckers auch noch das Einkuppeln des Verbindungssteckers in ein korrespondierendes Gegenelement eines automatischen Kupplungssystems erleichtert werden.

Bevorzugt ist der Steckverbinder starr am Grundkörper festgelegt. Durch die starre Anordnung des Steckverbinders am Grundkörper kann erreicht werden, dass eine besonders sichere Festlegung des Steckverbinders erfolgen kann. Des Weiteren kann die starre Anordnung des Steckverbinders am Grundkörper auch noch dazu benutzt werden, dass der Steckverbinder als eine Ausrichtungsvorrichtung der Adapteranordnung dienen kann. Beispielsweise kann der Steckverbinder mittels Befestigungsmitteln form-, kraft- und/oder stoffschlüssig am Grundkörper festgelegt sein. Bevorzugt sind diese Befestigungsmittel jedoch reversibel lösbar. Beispielsweise kann das Befestigungsmittel hierzu eine Schraube sein. Durch die reversible Lösbarkeit wird ermöglicht, dass bei einer Beschädigung des Steckverbinders dieser leicht ausgetauscht werden kann. Alternativ bevorzugt kann der Steckverbinder jedoch auch rotatorisch um den Königszapfen der Adapteranordnung gelagert sein.

In einer vorteilhaften Ausführungsform ist der Steckverbinder mittel- und/oder unmittelbar am Grundkörper, insbesondere reversibel, fixiert. Hierdurch kann eine besonders sichere Festlegung des Grundkörpers am Steckverbinder erfolgen.

Bevorzugt weist die Adapteranordnung eine Verbindungskonsole zum Verbinden mit einem Leitungsstrang, insbesondere einer Spiralleitung, auf und/oder wobei die Adapteranordnung einen Leitungsstrang, insbesondere eine Spiralleitung, aufweist, wobei der Leitungsstrang dazu ausgelegt ist, energieleitend mit einem Anhänger verbunden zu sein. Durch die Verbindungskonsole und/oder durch den Leitungsstrang kann in einfacher Weise eine energieleitende Verbindung mit einem Anhänger erfolgen. Alternativ bevorzugt kann der Leitungsstrang auch dazu so ausgelegt sein, mit einem Zugfahrzeug verbunden zu sein. Insbesondere ist diese Art der Ausgestaltung dabei vorteilhaft, wenn die Adapteranordnung dazu dient, ein mit einem Teil eines automatischen Kupplungssystems ausgerüsteten Anhänger oder Zugfahrzeug mit einem nicht mit einem automatischen Kupplungssystem ausgerüsteten Zugfahrzeug oder Anhänger zu verbinden. In dieser beispielhaften Situation dient daher die Adapteranordnung als eine Art Energiekupplung zwischen den Energieleitungen des Zugfahrzeugs bzw. Anhängers mit den Energieleitungen des Anhängers bzw. Zugfahrzeugs. Beispielsweise kann daher die Adapteranordnung insbesondere in Bereichen von Häfen eingesetzt werden, wo eine Vielzahl von verschiedenen Anhängern, welche teilweise mit einem automatischen Kupplungssystem oder gerade nicht mit einem automatischen Kupplungssystem mit einer geringeren Anzahl von Zugfahrzeugen verbunden werden sollen, welche mit automatischen Kupplungssystemen ausgerüstet sind. Der Leitungsstrang kann dabei insbesondere als eine Spiralleitung ausgebildet sein, um eine relative translatorische oder rotatorische Lageänderung der Adapteranordnung relativ zum Zugfahrzeug und/oder zum Anhänger ausgleichen zu können. Der Leitungsstrang kann dabei sowohl dazu dienen, elektrische, pneumatische und/oder hydraulische Energie zu übertragen. Die Verbindungskonsole kann als eine Art Stecker ausgebildet sein, welcher energieleitend mit dem Leitungsstrang verbunden werden kann.

Vorteilhafterweise umfasst die Adapteranordnung eine Abstützvorrichtung, wobei die Abstützvorrichtung dazu ausgelegt ist, die Adapteranordnung gegenüber einem Boden abzustützen oder abstützen zu können. Durch das Vorsehen einer Abstützvorrichtung kann insbesondere die Handhabbarkeit und/oder die Lagerbarkeit der Adapteranordnung erhöht werden. Besonders bevorzugt ist die Abstützvorrichtung in ihrer Höhe, insbesondere in Richtung der Erstreckungsrichtung des Königszapfens verstellbar bzw. variabel. Dies kann beispielsweise dadurch erfolgen, dass die Abstützvorrichtung aus einem oder mehreren Stützbeinen gebildet ist. Vorteilhafterweise sind die Stützbeine dabei mittel- oder unmittelbar starr am Grundkörper angeordnet. Besonders bevorzugt ist es, wenn diese Stützbeine automatisch durch einen elektrischen, pneumatischen oder hydraulischen Antrieb in ihrer Höhe verstellbar sind. Hierdurch kann insbesondere die Handhabung der Adapteranordnung weiter vereinfacht werden.

Besonders bevorzugt ist die Abstützvorrichtung einstückig mit dem Grundkörper ausgebildet und/oder wobei die Abstützvorrichtung ein Teil des Grundkörpers ist. Hierdurch kann eine besonders mechanisch belastbare Abstützung der Adapteranordnung erreicht werden.

In einer bevorzugten Ausführungsform umfasst die Abstützvorrichtung zumindest eine Abstützfläche und wobei die Abstützfläche im Wesentlichen senkrecht zu der Erstreckungsrichtung des Königszapfens ist. Hierdurch kann eine besonders kipparme Abstützvorrichtung erreicht werden, sodass ein besonders sicherer Stand der Adapteranordnung erreicht werden kann.

Ein weiterer Aspekt der Erfindung kann einen Sattelzug betreffen, wobei der Sattelzug eine Adapteranordnung wie vorgehend beschrieben, ein Zugfahrzeug und einen Anhänger umfasst. Durch das Verwenden einer erfindungsgemäßen Adapteranordnung in einem Sattelzug kann ein besonders hohes Maß an Variabilität der Kupplungsorgane (Königszapfen und Sattelkupplungsplatte) des Sattelzugs erreicht werden. Besonders bevorzugt ist es dabei, wenn das Zugfahrzeug des Sattelzugs ein autonomes Zugfahrzeug ist. Alternativ oder zusätzlich bevorzugt verfügt das Zugfahrzeug über ein automatisches Kupplungssystem, welches ein Steckerelement umfasst, welches energieleitend mit dem Verbindungsstecker der erfindungsgemäßen Adapteranordnung verbunden ist und/oder verbindbar ist.

Weitere Vorteile und Merkmale der vorliegenden Erfindung ergeben sich aus der nachfolgenden Beschreibung mit Bezugszeichen auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1: einen Sattelzug umfassend eine Adapteranordnung;
- Figur 2: eine Explosionszeichnung eines Sattelzuges umfassend eine Adapteranordnung;
- Figur 3: eine Frontansicht einer Adapteranordnung; und
- Figur 4: einen Schnitt durch eine Adapteranordnung.

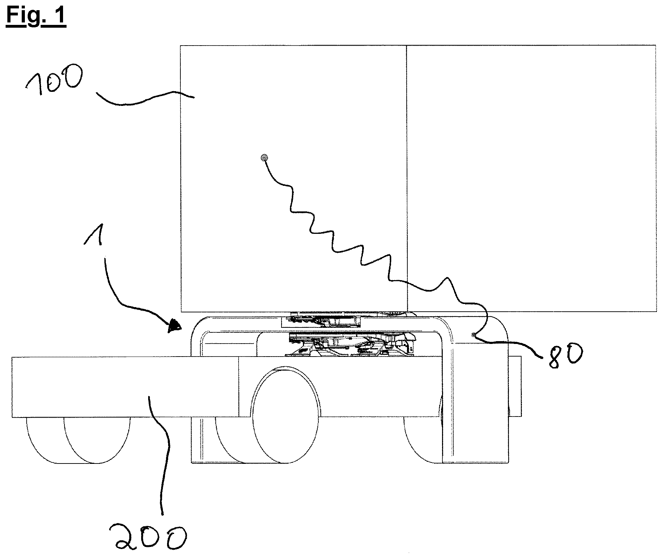

In **Figur 1** ist ein Sattelzug zu sehen, welcher einen Anhänger 100, eine Adapteranordnung 1 und ein autonomes Zugfahrzeug 200 umfasst. Der Anhänger 100 ist energieleitend über eine Spiralleitung mit der Verbindungskonsole 80 der Adapteranordnung 1 verbunden.

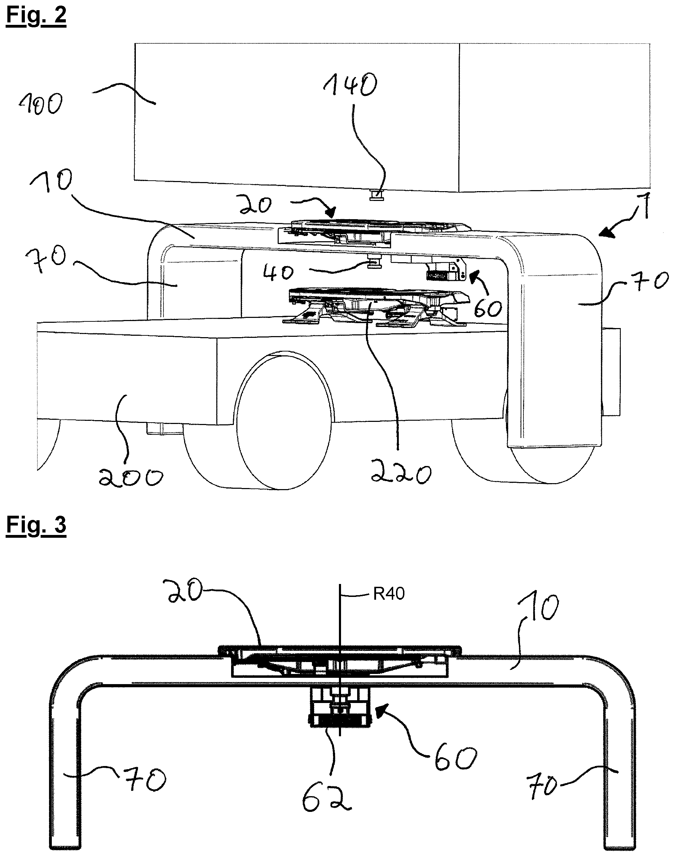

In **Figur 2** ist eine Explosionszeichnung eines Sattelzugs gezeigt, welche eine Adapteranordnung 1, ein Zugfahrzeug 200 und einen Anhänger 100 aufweist. Der Anhänger 100 verfügt über einen Anhängerkönigszapfen 140, welche in einem eingekuppelten Zustand mit der Kupplungsanordnung 20 krafttechnisch, insbesondere formschlüssig, verbunden ist, sodass Zugkräfte von der Kupplungsanordnung 20 der Adapteranordnung 1 auf den Anhängerkönigszapfen 140 des Anhängers übertragen werden können. Die Kupplungsanordnung 20 der Adapteranordnung 1 ist dabei in dem dargestellten Ausführungsbeispiel durch eine Sattelkupplungsplatte gebildet. Diese Sattelkupplungsplatte 20 ist dabei an dem Grundkörper 10 der Adapteranordnung 1 starr festgelegt. Der Grundkörper 10 ist einstückig mit den Abstützvorrichtungen 70 ausgebildet, wobei diese die distal gegenüberliegenden Enden des Grundkörpers 10 ausbilden. Zur Kraftübertragung zu dem Zugfahrzeug 200 verfügt die erfindungsgemäße Adapteranordnung 1 über einen Königszapfen 40, welcher in einem eingekuppelten Zustand in der Zugfahrzeugsattelkupplung 220 angeordnet ist und wobei in einem eingekuppelten Zustand Kräfte zwischen dem Königszapfen 40 und der Zugfahrzeugsattelkupplung 220 übertragen werden können. Die erfindungsgemäße Adapteranordnung 1 verfügt auch über einen Steckverbinder 60, um energieleitend mit einem Teil eines automatischen Kupplungssystems des Zugfahrzeugs 200 energieleitend verbunden zu sein oder verbindbar zu sein.

In **Figur 3** ist eine Frontalansicht einer erfindungsgemäßen Adapteranordnung 1 gezeigt. Die erfindungsgemäße Adapteranordnung 1 verfügt über einen Grundkörper 10 und über eine Kupplungsanordnung 20 in Form einer Sattelkupplungsplatte und über einen Königszapfen 40, welcher sich in eine Erstreckungsrichtung des Königszapfens (R40) erstreckt. In Richtung dieser Erstreckungsrichtung des Königszapfens unterhalb der Kupplungsanordnung befindet sich der Steckverbinder 60, welcher über einen Verbindungsstecker 62 verfügt. Dieser Verbindungsstecker 62 ist dabei rotatorisch gelagert, um eine gewisse Ausgleichsbewegung vollführen zu können.

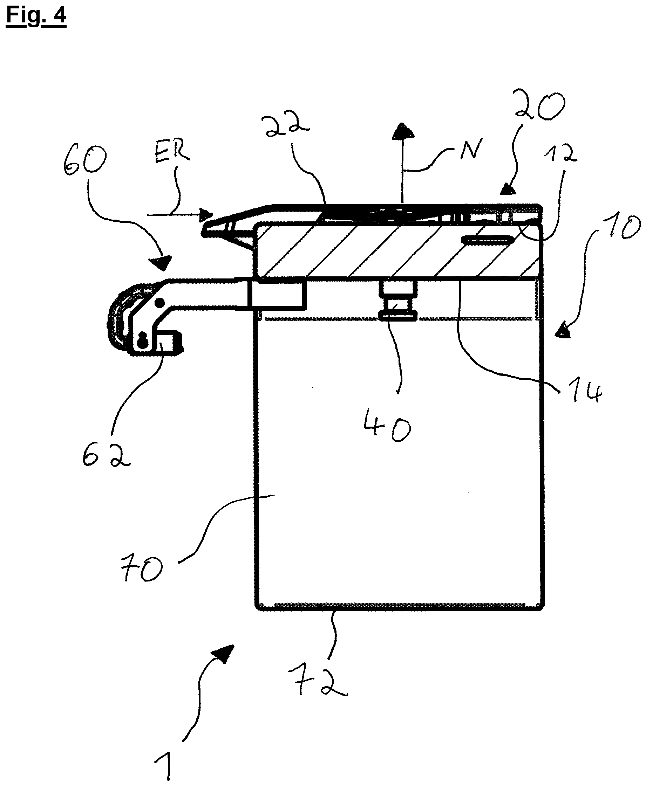

In **Figur 4** ist ein Schnitt durch eine erfindungsgemäße Adapteranordnung 1 gezeigt. Die erfindungsgemäße Adapteranordnung 1 verfügt über eine Kupplungsanordnung 20 in Form einer Sattelkupplungsplatte. Diese Sattelkupplungsplatte 20 ist an einer Sattelkupplungsfläche 12 des Grundkörpers starr angeordnet. Die Kupplungsanordnung 20 verfügt über eine Auflagefläche 22, welche eine nach außen weisende Normale N aufweist. Darüber hinaus weist die Kupplungsanordnung 20 auch eine Einfahröffnung auf, welche sich in eine Einfahrrichtung ER erstreckt. Gegenüberliegend zur Kupplungsanordnung 20 ist am Grundkörper 10 der Königszapfen 40 der Adapteranordnung 1 an der Königszapfenfläche 14 starr befestigt. In Einfahrrichtung ER ist der Verbindungsstecker 62 sowohl zu der Kupplungsanordnung 20 als auch zum Königszapfen 40 und zum Grundkörper 10 beabstandet. In der in Figur 4 dargestellten Ausführungsform verfügt die Adapteranordnung 1 über eine Abstützvorrichtung 70, welche einstückig mit dem Grundkörper 10 ausgebildet ist. Zur Abstützung gegenüber einem Boden verfügt die Abstützvorrichtung 70 über eine Abstützfläche 72.

### Bezugszeichenliste:

- 1: - Adapteranordnung
- 10: - Grundkörper
- 12: - Sattelkupplungsfläche
- 14: - Königszapfenfläche
- 20: - Kupplungsanordnung
- 22: - Auflagefläche
- 40: - Königszapfen
- 60: - Steckverbinder
- 62: - Verbindungsstecker
- 70: - Abstützvorrichtung
- 72: - Abstützfläche
- 80: - Verbindungskonsole
- 100: - Anhänger
- 140: - Anhängerkönigszapfen
- 200: - Zugfahrzeug
- 220: - Zugfahrzeugsattelkupplung
- R40: - Erstreckungsrichtung des Königszapfens
- ER: - Einfahrrichtung
- N: - Normale der Auflagefläche

## Patentansprüche

1. Adapteranordnung (1), insbesondere Sattelkupplungsadapteranordnung, für
einen Sattelzug, umfassend
einen Grundkörper (10), eine Kupplungsanordnung (20), insbesondere eine Sattelkupplungsplatte, und einen Königszapfen (40),
wobei der Königszapfen (40) mittel und/oder unmittelbar am Grundkörper (10) festgelegt ist,
wobei die Kupplungsanordnung (20) als eine separate Kupplungsplatte ausgebildet ist, welche an dem Grundkörper (10) festgelegt ist, und
wobei insbesondere die Kupplungsanordnung (20) relativ zum Königszapfen (40) ortsfest ist,
**dadurch gekennzeichnet, dass** die Adapteranordnung (1) einen Steckverbinder (60), insbesondere für ein automatisches Kupplungssystem, aufweist,
wobei der Steckverbinder (60) einen Verbindungsstecker (62) aufweist,
wobei der Verbindungsstecker (62) in Richtung der Erstreckungsrichtung des Königszapfens (40) vom Königszapfen (40) beabstandet ist.

2. Adapteranordnung (1) gemäß Anspruch 1,
wobei der Königszapfen (40) an einer Königszapfenfläche (14) des Grundkörpers (10), insbesondere starr und/oder ortsfest, mittel und/oder unmittelbar angeordnet ist, und/oder
wobei die Kupplungsanordnung (20) an einer Sattelkupplungsfläche (12) des Grundkörpers (10), insbesondere starr und/oder ortsfest, mittel und/oder unmittelbar angeordnet ist.

3. Adapteranordnung (1) gemäß einem der vorhergehenden Ansprüche, wobei der Königszapfen (40) in Richtung einer Erstreckungsrichtung des Königszapfens (R40) gegenüberliegend zu der Kupplungsanordnung (20) an dem Grundkörper (10) angeordnet ist.

4. Adapteranordnung (1) gemäß einem der vorhergehenden Ansprüche,
wobei die Richtung der Erstreckungsrichtung des Königszapfens (R40) im Wesentlichen parallel zu einer Normalen (N) einer Auflagefläche (22) der Kupplungsanordnung (20) ist.

5. Adapteranordnung (1) gemäß einem der vorhergehenden Ansprüche,
wobei die Projektion des Königszapfens (40) in Richtung der Erstreckungsrichtung des Königszapfens (R40) zumindest teilweise, insbesondere vollständig, von der Projektion der Kupplungsanordnung (20) in Richtung der Erstreckungsrichtung des Königszapfens (R40) überdeckt ist.

6. Adapteranordnung (1) gemäß einem der vorhergehenden Ansprüche,
wobei die Adapteranordnung (1) eine Ausrichtungsanordnung, insbesondere einen Keil und/oder eine Keilanordnung, aufweist.

7. Adapteranordnung (1) gemäß einem der vorherigen Ansprüche,
wobei der Abstand des Verbindungssteckers (62) von der Kupplungsanordnung (20) größer als der Abstand des Verbindungssteckers (62) von dem Königszapfen (40), insbesondere in Richtung der Erstreckungsrichtung des Königszapfens (R40), ist.

8. Adapteranordnung (1) gemäß einem der vorhergehenden Ansprüche,
wobei die Kupplungsanordnung (20) eine Einfahröffnung aufweist, welche sich in eine Einfahrrichtung (ER) erstreckt,
wobei ein Anhängerkönigszapfen (140) entlang der Einfahrrichtung (ER) in die Einfahröffnung der Kupplungsanordnung (20) einfahrbar ist,
wobei der Verbindungsstecker (62) in Richtung der Einfahrrichtung (ER) von der Kupplungsanordnung (20) und/oder vom Königszapfen (30) und/oder vom Grundkörper (10) beabstandet ist.

9. Adapteranordnung (1) gemäß einem der vorhergehenden Ansprüche,
wobei der Steckverbinder (60) starr und/oder ortsfest am und/oder relativ zum Grundkörper (10) festgelegt ist.

10. Adapteranordnung (1) gemäß einem der vorhergehenden Ansprüche,
wobei die Adapteranordnung (1) eine Verbindungskonsole (80) zum Verbinden mit einem Leitungsstrang, insbesondere einer Spiralleitung, aufweist, und/oder
wobei die Adapteranordnung (1) einen Leitungsstrang, insbesondere eine Spiralleitung, aufweist,
wobei der Leitungsstrang dazu ausgelegt ist, energieleitend mit einem Anhänger verbunden zu sein.

11. Adapteranordnung (1) gemäß einem der vorhergehenden Ansprüche,
wobei die Adapteranordnung (1) eine Abstützvorrichtung (70) umfasst,
wobei die Abstützvorrichtung dazu ausgelegt ist, die Adapteranordnung (1) gegenüber einem Boden abzustützen oder abstützen zu können.

12. Adapteranordnung (1) gemäß Anspruch 11,
wobei die Abstützvorrichtung (70) einstückig mit dem Grundkörper (10) ausgebildet ist.

13. Adapteranordnung (1) gemäß einem der Ansprüche 11 oder 12,
wobei die Abstützvorrichtung (70) zumindest eine Abstützfläche (72) umfasst, und
wobei die Abstützfläche im Wesentlichen senkrecht zu der Erstreckungsrichtung des Königszapfens (R40) ist.

## Claims

1. Adapter arrangement (1), in particular fifth wheel adapter arrangement, for a semitrailer tractor, comprising
a base body (10), a coupling arrangement (20), in particular a fifth-wheel coupling plate, and a king pin (40),
wherein the king pin (40) is fixed indirectly and/or directly to the base body (10),
wherein the coupling arrangement (20) is formed as a separate coupling plate, which is fixed to the base body (10), and
in particular the coupling arrangement (20) being stationary relative to the kingpin (40),
**characterized in that** the adapter arrangement (1) has a plug connector (60), in particular for an automatic coupling system,
wherein the plug connector (60) has a connecting plug (62),
wherein the connecting plug (62) is spaced from the king pin (40) in the direction of extension of the king pin (40).

2. Adapter arrangement (1) according to claim 1,
wherein the king pin (40) is arranged on a king pin surface (14) of the base body (10), in particular rigidly and/or stationarily, indirectly and/or directly, and/or
wherein the coupling arrangement (20) is arranged on a fifth wheel coupling surface (12) of the base body (10), in particular rigidly and/or stationarily, indirectly and/or directly.

3. An adapter assembly (1) according to any one of the preceding claims,
wherein the king pin (40) is arranged on the base body (10) opposite to the coupling arrangement (20) in the direction of an extending direction of the king pin (R40).

4. An adapter assembly (1) according to any one of the preceding claims,
wherein the direction of extension of the king pin (R40) is substantially parallel to a normal (N) of a bearing surface (22) of the coupling assembly (20).

5. Adapter arrangement (1) according to any of the preceding claims,
wherein the projection of the king pin (40) in the direction of the direction of extension of the king pin (R40) is at least partially, in particular completely, covered by the projection of the coupling arrangement (20) in the direction of the direction of extension of the king pin (R40).

6. Adapter arrangement (1) according to any of the preceding claims,
wherein the adapter arrangement (1) comprises an alignment arrangement, in particular a wedge and/or a wedge arrangement.

7. Adapter arrangement (1) according to any one of the preceding claims,
wherein the distance of the connecting plug (62) from the coupling arrangement (20) is greater than the distance of the connecting plug (62) from the king pin (40), in particular in the direction of extension of the king pin (R40).

8. An adapter assembly (1) according to any one of the preceding claims,
wherein the coupling arrangement (20) has a retraction opening,
which extends in a retraction direction (ER),
wherein a trailer king pin (140) is retractable into the retraction opening of the coupling assembly (20) along the retraction direction (ER),
wherein the connecting plug (62) is spaced from the coupling arrangement (20) and/or from the king pin (30) and/or from the base body (10) in the direction of the retraction direction (ER).

9. Adapter arrangement (1) according to any one of the preceding claims,
wherein the connector (60) is rigidly and/or stationarily fixed to and/or relative to the base body (10).

10. Adapter arrangement (1) according to one of the preceding claims,
wherein the adapter arrangement (1) has a connection bracket (80) for connection to a line, in particular a spiral line, and/or
wherein the adapter arrangement (1) comprises a line strand, in particular a spiral line,
wherein the line strand is designed to be connected to a trailer in an energy-conducting manner.

11. An adapter assembly (1) according to any one of the preceding claims,
wherein the adapter assembly (1) comprises a support device (70),
wherein the support device is adapted to support or be able to support the adapter arrangement (1) relative to a floor.

12. Adapter arrangement (1) according to claim 11,
wherein the support device (70) is formed integrally with the base body (10).

13. An adapter assembly (1) according to any one of claims 11 or 12,
wherein the support device (70) comprises at least one support surface (72), and
wherein the support surface is substantially perpendicular to the direction of extension of the king pin (R40).

## Revendications

1. Ensemble adaptateur (1), en particulier ensemble adaptateur de sellette d'attelage, pour une semi-remorque, comprenant
un corps de base (10), un ensemble d'attelage (20), en particulier un plateau de sellette d'attelage, et un pivot central (40),
le pivot central (40) étant immobilisé directement et/ou indirectement au corps de base (10), et
l'ensemble d'attelage (20) étant réalisé sous la forme d'un plateau d'attelage séparé qui est immobilisé au corps de base (10), et
l'ensemble d'attelage (20) étant fixe par rapport au pivot central (40),
**caractérisé en ce que**
l'ensemble adaptateur (1) comprend un connecteur enfichable (60), en particulier pour un système d'attelage automatique, le connecteur enfichable (60) comprenant une fiche de connexion (62), la fiche de connexion (62) étant espacée du pivot central (40) dans le sens de la direction d'extension du pivot central (40).

2. Ensemble adaptateur (1) selon la revendication 1,
dans lequel le pivot central (40) est disposé directement et/ou indirectement sur une surface de pivot central (14) du corps de base (10), en particulier de manière rigide et/ou fixe, et/ou
l'ensemble d'attelage (20) est disposé directement et/ou indirectement sur une surface de sellette d'attelage (12) du corps de base (10), en particulier de manière rigide et/ou fixe.

3. Ensemble adaptateur (1) selon l'une des revendications précédentes,
dans lequel le pivot central (40) est disposé sur le corps de base (10) à l'opposé de l'ensemble d'attelage (20) dans le sens d'une direction d'extension du pivot central (R40).

4. Ensemble adaptateur (1) selon l'une des revendications précédentes, dans lequel le sens de la direction d'extension du pivot central (R40) est sensiblement parallèle à une normale (N) d'une surface d'appui (22) de l'ensemble d'attelage (20).

5. Ensemble adaptateur (1) selon l'une des revendications précédentes,
dans lequel la projection du pivot central (40) dans le sens de la direction d'extension du pivot central (R40) est au moins partiellement, en particulier entièrement, recouverte par la projection de l'ensemble d'attelage (20) dans le sens de la direction d'extension du pivot central (R40).

6. Ensemble adaptateur (1) selon l'une des revendications précédentes,
dans lequel l'ensemble adaptateur (1) comprend un ensemble d'alignement, en particulier une cale et/ou un ensemble de cale.

7. Ensemble adaptateur (1) selon l'une des revendications précédentes,
dans lequel la distance entre la fiche de connexion (62) et l'ensemble d'attelage (20) est supérieure à la distance entre la fiche de connexion (62) et le pivot central (40), en particulier dans le sens de la direction d'extension du pivot central (R40).

8. Ensemble adaptateur (1) selon l'une des revendications précédentes,
dans lequel l'ensemble d'attelage (20) présente une ouverture d'insertion qui s'étend dans une direction d'insertion (ER),
un pivot central de remorque (140) peut être inséré dans l'ouverture d'insertion de l'ensemble d'attelage (20) le long de la direction d'insertion (ER),
la fiche de connexion (62) est espacée de l'ensemble d'attelage (20) et/ou du pivot central (30) et/ou du corps de base (10) dans le sens de la direction d'insertion (ER).

9. Ensemble adaptateur (1) selon l'une des revendications précédentes,
dans lequel le connecteur enfichable (60) est immobilisé de manière rigide et/ou fixe sur et/ou par rapport au corps de base (10).

10. Ensemble adaptateur (1) selon l'une des revendications précédentes,
dans lequel l'ensemble adaptateur (1) comprend une console de connexion (80) pour la connexion à une ligne de câble, en particulier à un câble en spirale, et/ou
l'ensemble adaptateur (1) comprend une ligne de câble, en particulier un câble en spirale,
la ligne de câble étant conçue pour être reliée à une remorque de manière à conduire l'énergie.

11. Ensemble adaptateur (1) selon l'une des revendications précédentes,
dans lequel l'ensemble adaptateur (1) comprend un dispositif de support (70), le dispositif de support étant adapté pour supporter ou pouvoir supporter l'ensemble adaptateur (1) par rapport à un sol.

12. Ensemble adaptateur (1) selon la revendication 11,
dans lequel le dispositif de support (70) est réalisé d'une seule pièce avec le corps de base (10).

13. Ensemble adaptateur (1) selon l'une des revendications 11 ou 12,
dans lequel le dispositif de support (70) comprend au moins une surface de support (72), et
la surface de support est sensiblement perpendiculaire à la direction d'extension du pivot central (R40).
